# FASCICULE DE BREVET EUROPEEN

(11) **EP 2 376 276 B1**
(45) Date de publication et mention de la délivrance du brevet: **09.11.2016**
(21) Numéro de dépôt: 09805755.7
(22) Date de dépôt: 18.12.2009
(51) Int. Cl.: B29C 70/54, B29C 70/38

(54) **TETE POUR L'APPLICATION DE FILS DE RENFORT SUR UNE SURFACE DE DEPOSE**
KOPF ZUM AUFBRINGEN VON VERSTÄRKUNGSFÄDEN AUF EINE ABLAGEFLÄCHE
HEAD FOR THE APPLICATION OF REINFORCING THREADS ON A DEPOSITION SURFACE

(30) Priorité: 19.12.2008 FR 0858875
(43) Date de publication de la demande: 19.10.2011
(73) Titulaire: Hexcel Reinforcements, 01120 Dagneux (FR)
(72) Inventeur: BERAUD, Jean-Marc, F-38140 Rives (FR); DUCARRE, Jacques, F-38110 La Tour du Pin (FR); THIEL, Jean-Benoît, F-38110 La Chapelle de la Tour (FR)
(74) Mandataire: Thibault, Jean-Marc
(86) Numéro de dépôt international: PCT/FR2009/052623
(87) Numéro de publication internationale: WO 2010/070245

(56) Documents cités:
- EP-A1- 0 626 252
- EP-A1- 1 775 108
- EP-A2- 0 167 377
- EP-A2- 0 225 563
- WO-A2-2006/092514
- WO-A2-2008/154269
- FR-A1- 2 656 826
- FR-A1- 2 913 366
- US-A- 5 110 395

## Description

La présente invention concerne le domaine technique général des machines ou des dispositifs adaptés pour assurer le dépôt de fils de renfort au sens général afin d'assurer la fabrication de pièces en matériaux composites.

La présente invention concerne plus particulièrement une tête d'application faisant partie d'une machine d'application ou de placement de fils de renfort sur une surface de dépose.

L'objet de l'invention concerne une tête adaptée pour assurer le dépôt de divers types de fils de renfort, incluant par exemple des faisceaux ou torons de fils, des tresses de fils, des fibres, et réalisés en divers matériaux constitutifs, tels que carbone, verre, polyester, aramide, etc., ces fils de renfort étant de nature sèche ou préimprégnée d'un agent de liaison ou d'un liant.

L'objet de l'invention trouve une application particulièrement avantageuse mais non exclusivement dans le domaine aéronautique, aérospatiale ou automobile.

L'état de la technique a proposé divers types de machines d'application mettant en oeuvre une tête de placement de fils de renfort. Par exemple, la demande de brevet WO 2006/092514 décrit une tête d'application d'une nappe de fils de renfort comportant pour chaque fil de renfort, un système de coupe individuel et un système de réacheminement individuel du fil de renfort jusqu'à un rouleau souple d'application. Les fils de renfort sont guidés depuis leur zone de stockage jusqu'au rouleau souple d'application à l'aide de systèmes de guidage. Chaque système individuel de coupe comprend une lame de coupe montée à l'extrémité d'une tige d'un vérin pneumatique monté en vis-à-vis d'un contre outil ou enclume. Le vérin pneumatique est apte à déplacer la lame de coupe entre une position de repos dans laquelle la lame est écartée du fil de renfort et une position active dans laquelle la lame de coupe vient en butée contre l'enclume pour couper le fil de renfort.

Chaque système individuel de réacheminement comprend un galet d'entrainement monté en vis-à-vis d'un contre galet monté à l'extrémité d'une tige d'un vérin pneumatique. Le vérin est apte à déplacer le contre galet entre une position de repos dans laquelle le contre galet est écarté du fil de renfort et une position active dans laquelle le contre galet vient plaquer le fil de renfort contre le galet d'entrainement pour faire avancer le fil de renfort jusqu'au rouleau souple d'application.

Pour des raisons d'encombrement, les systèmes individuels de réacheminement et les systèmes individuels de coupe sont disposés en quinconce selon des rangées superposées. Malgré le montage en quinconce des systèmes individuels de coupe et de réacheminement, cette tête d'application présente un encombrement important, interdisant son utilisation pour le dépôt de fils de renfort sur une surface à géométrie complexe, comme celle présentant des courbures multiples ou un profil concave à faible rayon de courbure. De plus, de par sa conception, cette tête d'application présente un coût de fabrication important.

De même, la demande de brevet WO 2008/154269 décrit une tête d'application de fils de renfort sur une surface de dépose comportant notamment un système de réacheminement des fils de renfort après leur coupe jusqu'à un système de prise en charge des fils de renfort.

Le système de réacheminement comporte un tambour entraîné en rotation selon un sens et un contre-tambour délimitant avec le tambour un guichet de passage pour les fils de renfort. Le tambour est pourvu de deux systèmes de coupe montés diamétralement opposés à la périphérie du tambour et aptes à être actionnés radialement lors de leur passage devant une came fixe pour permettre la coupe des fils de renfort. En amont de chaque système de coupe, le tambour comporte sur une plage angulaire limitée, une zone d'entraînement coopérant avec le contre-tambour pour entraîner les fils de renfort jusqu'au système de prise en charge. Le tambour comporte en amont de la zone d'entraînement, une zone de dégagement permettant le libre passage des fils de renfort.

Cette tête d'application présente l'inconvénient de ne pas pouvoir permettre de moduler à volonté, les phases de coupe, d'entraînement des fils de renfort et de libre passage des fils de renfort en raison de la disposition successive des zones correspondantes à la périphérie du tambour. Une telle disposition nécessite de recourir à un tambour de grand diamètre de sorte que cette tête d'application possède également un encombrement important.

La présente invention vise donc à remédier aux inconvénients de l'art antérieur en proposant une nouvelle tête d'application de fils de renfort adaptée pour présenter un encombrement réduit, simple de conception et de coût réduit.

Pour atteindre de tels objectifs, la présente invention a pour objet une tête d'application de fils de renfort sur une surface de dépose, conforme à la revendication 1.

La tête d'application selon l'invention comporte en outre au moins l'une des caractéristiques suivantes :
- le système d'écartement/rapprochement comporte un levier pivotant commandé en déplacement et équipé du contre tambour ;
- le levier pivotant est commandé en déplacement par un organe moteur ;
- le mécanisme de coupe comporte une enclume sur laquelle l'organe de coupe assure la coupe des fils de renfort ;
- un dispositif de guidage jusqu'à la zone d'application, d'au moins un fil de renfort provenant d'un dispositif de stockage ;
- le dispositif de guidage des fils de renfort comporte entre le mécanisme de coupe et la zone d'application, un conduit tronconique de guidage des fils de renfort s'évasant de la zone d'application en direction du mécanisme de coupe ;
- le dispositif de guidage des fils de renfort comporte un guide disposé entre le mécanisme de coupe et le tambour d'entraînement ;
- le dispositif de guidage des fils de renfort comporte en amont du tambour d'entraînement, un bloc de guidage dans lequel est aménagé un chemin de guidage individuel pour chaque fil de renfort ;
- un galet applicateur monté libre en rotation, dans la zone d'application des fils de renfort.

Diverses autres caractéristiques ressortent de la description faite ci-dessous en référence aux dessins annexés qui montrent, à titre d'exemples non limitatifs, des formes de réalisation de l'objet de l'invention.
La **Figure 1** est une vue de face d'un premier exemple de réalisation d'une tête d'application conforme à l'invention.
La **Figure 2** est une vue en perspective partielle de la tête d'application illustrée à la **Fig. 1****.**
Les **Figures 3** à **5** montrent la tête d'application illustrée aux **Fig. 1** et **2** dans diverses positions caractéristiques de fonctionnement.
La **Figure 6** illustre une autre variante de réalisation d'une tête d'application conforme à l'invention, adaptée pour assurer le placement simultané de plusieurs fils de renfort.
La **Figure 7** illustre une autre variante de réalisation d'une tête d'application conforme à l'invention, mettant en oeuvre un galet applicateur.

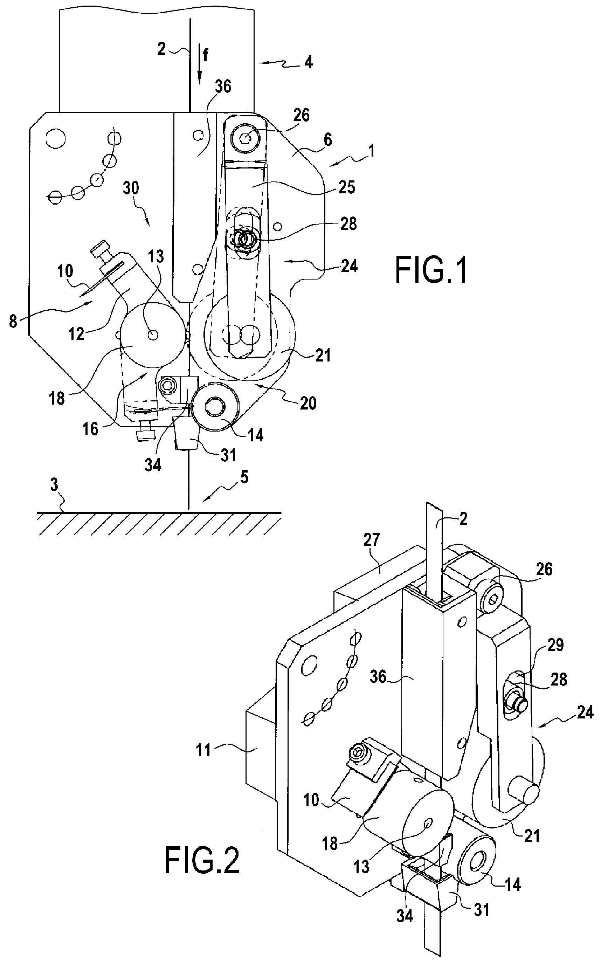

Tel que cela ressort plus précisément des **Fig. 1** à **5****,** l'objet de l'invention concerne une tête **1** pour assurer le placement, le dépôt ou l'application de fils de renfort **2** sur une surface d'application ou de dépose **3** au sens général, de manière à réaliser une pièce en matériau composite. Cette tête d'application **1** fait partie d'une machine d'application **4** qui généralement comporte un dispositif de déplacement formé d'un robot muni d'un bras polyarticulé à l'extrémité duquel est montée la tête d'application **1.** La machine d'application **4** n'est pas décrite plus précisément car elle est bien connue de l'homme du métier et ne fait pas partie précisément de l'objet de l'invention.

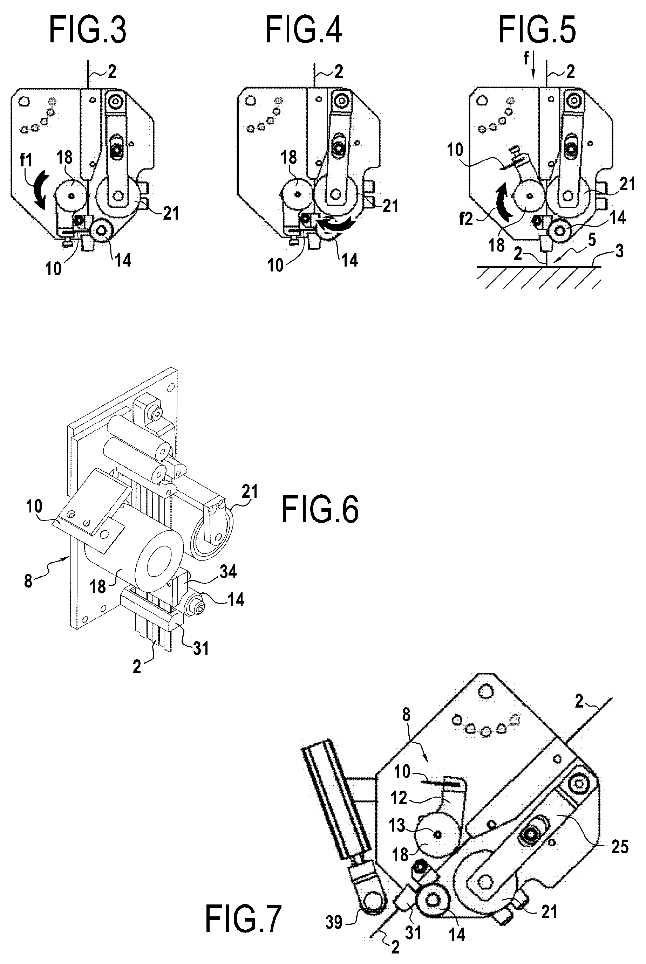

La tête d'application **1** est adaptée pour assurer le placement de fils de renfort **2** de toute nature et composition, se présentant sous la forme, par exemple, de fils, de tresses de fils, de torons de fils, de fibres, etc., et réalisés en divers matériaux constitutifs, tels que carbone, verre, polyester, aramide, etc., ces fils de renfort étant préimprégnés ou non d'un liant. La tête d'application **1** conforme à l'invention permet d'assurer le placement d'un ou de plusieurs fils de renfort **2** répartis en une ou plusieurs nappes déposées simultanément. Dans l'exemple illustré aux **Fig. 1** à **5****,** la tête d'application **1** assure le placement d'un fil de renfort alors que dans l'exemple de réalisation illustré à la **Fig. 6****,** la tête d'application permet l'application simultanée de six fils de renfort.

La tête d'application **1** assure le placement des fils de renfort **2** dans une zone d'application **5** de la surface de dépose **3** par le déplacement relatif entre la tête d'application **1** et la surface de dépose **3** et généralement le déplacement de la tête d'application **1** par rapport à la surface de dépose **3.** Les fils de renfort **2** sont issus d'un dispositif de stockage connu en soi et non représenté et sont amenés à être dévidés par tous moyens appropriés selon le sens de déplacement **f** représenté à la **Fig. 1****.**

La tête d'application **1** comporte une structure porteuse **6** pour un mécanisme **8** de coupe des fils de renfort **2.** Dans la variante illustrée aux **Fig. 1** à **5****,** le mécanisme **8** est adapté pour couper un unique fil de renfort **2** tandis que dans la variante illustrée à la **Fig. 6****,** le mécanisme **8** est adapté pour assurer la coupe simultanée d'une série de fils de renfort **2** formant une nappe de six fils de renfort dans l'exemple illustré. Le mécanisme de coupe **8** est situé bien entendu en amont de la zone d'application **5** en considération du sens de défilement **f** des fils de renfort.

Le mécanisme de coupe **8** comporte au moins un organe de coupe **10** et un organe moteur d'entrainement **11** permettant de déplacer l'organe de coupe **10** d'une part selon une course aller, pour permettre la coupe des fils de renfort **2,** et d'autre part selon une course retour de sens contraire au sens de la course aller pour permettre le dégagement de l'organe de coupe **10** par rapport aux fils de renfort **2.**

Dans l'exemple de réalisation illustré, l'organe de coupe **10** est monté mobile en rotation pour suivre une trajectoire circulaire. L'organe de coupe **10** telle une lame coupante, est monté de préférence de manière interchangeable par tout moyen connu, à l'extrémité d'un bras **12** lié en rotation avec un axe **13** entrainé en rotation par l'organe moteur **11.** Avantageusement, l'organe moteur **11** est réalisé par un organe de commande rotatif tel qu'un vérin rotatif pneumatique.

Selon une caractéristique préférée de réalisation, le mécanisme de coupe **8** comporte également une enclume **14** sur laquelle l'organe de coupe **10** vient en butée pour couper les fils de renfort **2**. Dans l'exemple illustré, l'enclume **14** est formée par un rouleau monté sur la structure porteuse **6,** de manière que le fil de renfort **2** occupe une position sensiblement tangente par rapport au rouleau enclume. Bien entendu, le rouleau enclume **14** et l'organe de coupe **10** s'étendent de part et d'autre du fil de renfort **2.**

L'organe moteur **11** entraine ainsi en rotation l'organe de coupe **10** selon d'une part, une course aller dans un sens de rotation illustré par la flèche **f1** entre une position de repos **(****Fig. 1****)** et une position de coupe **(****Fig. 3****)** et d'autre part, une course retour dans un sens de rotation illustré par la flèche **f2** contraire au sens de rotation **f1,** entre la position de coupe **(****Fig. 3****)** et la position de repos **(****Fig. 5****).** Il est à noter que l'organe de coupe **10** est monté de manière qu'en position de coupe ou de butée sur le rouleau enclume **14,** l'organe de coupe **10** s'étend sensiblement perpendiculairement à la direction de défilement du fil de renfort **2.** L'organe de coupe **10** possède donc un mouvement alternatif circulaire s'étendant selon une plage angulaire inférieure à 180° et par exemple de l'ordre de 150°. Le mouvement alternatif de l'organe de coupe **10** est donc délimité entre ses deux positions extrêmes à savoir la position de coupe et la position de repos ou de dégagement de l'organe de coupe par rapport aux fils de renfort.

Conformément à l'invention, l'organe moteur **11** de l'organe de coupe **10** assure également l'entrainement en déplacement d'un système de réacheminement **16** du fil de renfort **2.** En d'autres termes, le mécanisme de coupe **8** assure la motorisation du système de réacheminement **16** pour assurer l'amenée du fil de renfort **2,** après sa coupe par l'organe de coupe **10,** au moins jusqu'à la zone d'application **5.** Ce système de réacheminement **16** est adapté pour d'une part, ne pas entrainer les fils de renfort **2** lors de la course aller de l'organe de coupe **10,** et, d'autre part, entrainer les fils de renfort **2** au moins jusqu'à la zone d'application **5** lors de la course retour de l'organe de coupe **10.** Ainsi, le système de réacheminement **16** comporte des moyens d'entraînement des fils de renfort **2** au moins jusqu'a la zone d'application **5** lors de la course retour de l'organe de coupe **10** et des moyens n'entraînant pas les fils de renfort **2** lors de la course aller de l'organe de coupe **10.** Dans l'exemple de réalisation illustré sur les dessins, le système de réacheminement **16** comporte au moins un tambour **18** entrainé en rotation par l'organe moteur **11.** Dans l'exemple illustré, le tambour d'entrainement **18** est monté sur l'axe **13** en étant lié à ce dernier pour être entrainé en rotation par l'organe moteur **11.**

Selon une caractéristique préférée de réalisation, le système de réacheminement **16** comporte également un mécanisme de serrage **20** des fils de renfort **2** pour assurer leur maintien en position. Avantageusement, ce mécanisme de serrage **20** permet de serrer les fils de renfort **2** contre le tambour **18.** Dans l'exemple de réalisation illustré, le mécanisme de serrage **20** comporte un contre tambour **21** monté en vis-à-vis du tambour **18** de manière que le tambour **18** et le contre tambour **21** se trouvent situés de part et d'autre des fils de renfort **2.** Le contre tambour **21** est commandé en déplacement par rapport au tambour **18,** à l'aide d'un système d'écartement/rapprochement **24** de manière à déplacer le contre tambour **21,** soit en écartement avant la rotation du tambour **18** selon sa course aller **f1** pour laisser libres les fils de renfort **2,** soit en rapprochement avant la rotation du tambour **18** selon sa course de retour **f2** pour assurer l'entrainement par friction des fils de renfort **2** par le tambour **18.**

Selon la variante de réalisation illustrée, le système d'écartement/rapprochement **24** comporte un levier **25** monté pivotant à l'une de ses extrémités selon un axe de pivotement **26.** L'extrémité opposée du levier **25** est équipée du contre tambour **21.** Le système d'écartement/rapprochement **24** comporte également un organe moteur **27** permettant de déplacer le levier **25** pour amener le contre tambour **21** à occuper soit sa position d'écartement par rapport au tambour **18,** laissant passer librement les fils de renfort **2 (****Fig. 3****),** soit sa position de serrage dans laquelle les fils de renfort **2** sont serrés ou bloqués entre le contre tambour **21** et le tambour **18 (****Fig. 4****).** Selon une variante avantageuse de réalisation, l'organe moteur **27** est un organe moteur rotatif tel un vérin rotatif pneumatique agissant par une came **28** sur le levier **25.** Tel que cela ressort des **Fig. 1** et **2****,** la came **28** qui est entrainée en rotation par l'organe moteur **27** est montée à l'intérieur d'une lumière **29** aménagée dans le levier **25** entre l'axe de pivotement **26** et le contre tambour **21.**

Bien entendu, le tambour **18** et le contre tambour **21** sont situés en amont de l'enclume **14,** par rapport au sens de défilement **f** des fils de renfort **2.**

Le fonctionnement de la tête d'application **1** découle directement de la description qui précède.

Lorsqu'il apparaît le besoin de couper le fil de renfort **2,** l'organe moteur **11** est piloté de manière à assurer le pivotement de l'organe de coupe **10** selon la flèche **f1** de manière à amener l'organe de coupe **10** contre l'enclume **14 (****Fig. 3****).** Les fils de renfort **2** sont ainsi coupés au niveau de l'enclume **14.** L'organe moteur **27** du système d'écartement/rapprochement **24** est commandé pour assurer le rapprochement du contre tambour **21** par rapport au tambour **18** pour assurer le serrage du fil de renfort **2** entre le tambour **18** et le contre tambour **21.** Lorsque cette position de serrage du fil de renfort **2** est atteinte **(****Fig. 4****),** l'organe moteur **11** est piloté pour entrainer l'organe de coupe **10** sur sa course retour selon la flèche **f2 (****Fig. 5****).** Lors de la rotation de l'organe de coupe **10** selon sa course retour, le tambour **18** est entrainé également en rotation selon le sens de la flèche **f2**, conduisant ainsi à l'entrainement du fil de renfort selon son sens de défilement illustré par la flèche **f,** en raison du pincement ou du serrage du fil de renfort entre le tambour **18** et le contre tambour **21.** En d'autres termes, la rotation du tambour **18** selon la flèche **f2** conduit à amener le fil de renfort **2** au moins jusqu'à la zone d'application **5.** Bien entendu, le sens de rotation du tambour **18** est choisi de manière à obtenir le réacheminement du fil de renfort jusqu'à la zone d'application **5.** Par ailleurs, la course linéaire de réarmement du fil de renfort entre sa position de coupe et la zone d'application **5** dépend de la course angulaire du tambour **18.** Dans l'exemple, la course de rotation (aller ou retour) du tambour **18** est inférieure à 180° et par exemple de l'ordre de 150°.

L'organe moteur **27** peut ensuite être commandé pour écarter le contre tambour **21** par rapport au tambour **18** pour assurer le libre passage des fils de renfort et leur application sur la surface de dépose **3 (****Fig. 1****).** Il est à noter que tant que le contre tambour **21** occupe sa position rapprochée dans laquelle les fils de renfort sont serrés, la tête d'application **1** peut être déplacée dans l'espace sans risque de déplacement intempestif des fils de renfort. Il s'ensuit que compte tenu du fait que la course de réarmement des fils de renfort **2** est connue sans subir de modification en raison du serrage des fils de renfort, les fils de renfort **2** peuvent être appliqués dans une zone précise de la surface de dépose **3.**

Dans la description qui précède, l'organe moteur **11** est du type rotatif. Bien entendu, il peut être envisagé de mettre en oeuvre un organe moteur linéaire agissant sur le tambour **18** par l'intermédiaire d'un système de transformation de mouvement ou sur un système de réarmement du type à came par exemple. Dans le même sens, il peut être envisagé de mettre en oeuvre le tambour d'entrainement **18** sans le contre tambour **21.** Selon cette variante de réalisation, le tambour **18** est aménagé pour ne pas entrainer les fils de renfort **2** lors de la course aller de l'organe de coupe **10** et entrainer les fils de renfort lors de la course retour de l'organe de coupe **10.** Par exemple, le tambour **18** peut présenter par exemple un revêtement adapté pour assurer directement cette fonction d'entrainement, ou agir indirectement sur les fils de renfort à l'aide d'un mécanisme d'entrainement monodirectionnel des fils de renfort. Il peut être envisagé de mettre en oeuvre, en tant que système de réacheminement **16,** un mécanisme comportant une roue dentée agissant sur une crémaillère en contact avec le fil de renfort uniquement lors de la course de réacheminement par action par exemple du contre tambour **21.**

Il ressort de la description qui précède que la motorisation commune du mécanisme de coupe **8** et du système de réacheminement **16** présente un gain en terme d'encombrement et de coût. Par ailleurs, la mise en oeuvre d'un mécanisme de serrage **20** qui assure le maintien en position des fils de renfort **2** et contribue au réacheminement des fils de renfort, permet également de réaliser une tête d'application compacte.

Selon une variante avantageuse de réalisation, la tête d'application **1** comporte un dispositif de guidage **30** du ou des fils de renfort **2** jusqu'à la zone d'application **5.** Selon une caractéristique préférée de réalisation, le système de guidage **30** des fils de renfort comporte entre le mécanisme de coupe **8** et la zone d'application **5,** un conduit tronconique **31** de guidage des fils de renfort **2** s'évasant de la zone d'application **5** en direction du mécanisme de coupe **8.** Tel que cela ressort plus précisément des **Fig. 1** et **2****,** ce conduit tronconique **31** est placé en aval du rouleau enclume **14** par rapport au sens de défilement **f** des fils de renfort. Le conduit tronconique **31** présente ainsi une section de passage qui diminue dans le sens de défilement **f** pour atteindre sensiblement au niveau de la sortie du conduit tronconique **31** une section correspondant au calibre ou à la largeur du fil de renfort **2 (****Fig. 1** à **5****)** ou de l'ensemble des fils de renfort **(****Fig. 6**). La section d'entrée du conduit tronconique **31,** qui est ainsi plus grande que le calibre du fil de renfort **(****Fig. 1** à **5****)** ou des fils de renfort **(****Fig. 6****)** facilite la reprise des fils de renfort lors de la course de réacheminement des fils de renfort.

Selon une variante préférée de réalisation, le dispositif de guidage **30** des fils de renfort **2** comporte également un guide **34** disposé entre le mécanisme de coupe **8** et le tambour d'entrainement **18.** Ce guide **34** se trouve ainsi interposé entre le rouleau enclume **14** et le tambour d'entrainement **18.** Ce guide **34** délimite au moins un canal de guidage avec une largeur sensiblement égale au calibre d'un fil de renfort **2 (****Fig. 1** à **5****)** ou une série de chemins individuels de guidage pour chaque fil de renfort **2**, répartis par exemple en deux sous-nappes **(****Fig. 6****).**

Selon une autre variante préférée de réalisation, le dispositif de guidage **30** des fils de renfort comporte aussi en amont du tambour d'entrainement **18,** un bloc de guidage **36** dans lequel est aménagé un chemin de guidage individuel pour chaque fil de renfort **2.**

Dans la description qui précède, le placement des fils de renfort **2** sur la surface de dépose **3** est réalisé sans contact par la tête d'application **1.** Bien entendu, comme illustré à la **Fig. 7****,** la tête d'application **1** conforme à l'invention peut être équipée d'un organe applicateur **39,** tel qu'un galet ou rouleau monté libre en rotation sur la structure porteuse **6,** en s'étendant dans la zone d'application **5.** Cette tête d'application **1** assure ainsi le placement des fils de renfort **2** avec un contact continu sur la surface de dépose **3.**

L'invention n'est pas limitée aux exemples décrits et représentés car diverses modifications peuvent y être apportées sans sortir de son cadre.

## Revendications

1. **-** Tête d'application de fils de renfort **(2)** sur une surface de dépose (**3**), cette tête comportant :
- un mécanisme **(8)** de coupe des fils de renfort **(2)** en amont d'une zone d'application **(5),** comportant au moins un organe de coupe **(10)** et un organe moteur **(11)** permettant de déplacer l'organe de coupe (**10**),
- et un système de réacheminement **(16)** des fils de renfort **(2)** après leur coupe, au moins jusqu'à la zone d'application **(5),** comportant au moins un tambour **(18) caractérisé en ce que** l'organe de coupe **(10)** est monté à l'extrémité d'un bras **(12)** relié en rotation avec un axe **(13)** entraîné en rotation par l'organe moteur **(11)** permettant de déplacer l'organe de coupe **(10)** selon un mouvement alternatif circulaire, d'une part selon une course aller dans un sens de rotation (**f1**) pour permettre la coupe des fils de renfort (**2**), et d'autre part selon une course retour dans un sens de rotation **(f2)** de sens contraire à la course aller, pour permettre le dégagement de l'organe de coupe **(10)** par rapport aux fils de renfort (**2**), le tambour **(18)** étant monté sur l'axe **(13)** en étant lié à ce dernier pour être entraîné en rotation par l'organe moteur **(11)** du mécanisme de coupe **(8)** assurant la motorisation du système de réacheminement (**16**), le système de réacheminement **(16)** comportant un mécanisme **(20)** de serrage des fils de renfort **(2)** contre le tambour **(18),** le mécanisme de serrage **(20)** comportant un contre tambour **(21)** monté en vis à vis du tambour **(18)** de manière qu'entre le tambour **(18)** et le contre tambour **(21)** passent les fils de renfort **(2),** le contre tambour **(21)** étant commandé en déplacement par un système d'écartement/rapprochement **(24)** par rapport au tambour de manière à déplacer le contre tambour **(21)** soit en écartement avant la rotation du tambour **(18)** selon sa course aller (**f1**) pour laisser libres les fils de renfort **(2),** soit en rapprochement avant la rotation du tambour **(18)** selon sa course retour **(f2)** pour assurer l'entraînement par friction des fils de renfort **(2)** par le tambour **(18)** lors de sa rotation, au moins jusqu'à la zone d'application **(5).**

2. **-** Tête d'application selon la revendication 1, **caractérisée en ce que** le système d'écartement/rapprochement **(24)** comporte un levier pivotant **(25)** commandé en déplacement et équipé du contre tambour **(21).**

3. **-** Tête d'application selon la revendication 2, **caractérisée en ce que** le levier pivotant **(25)** est commandé en déplacement par un organe moteur **(27).**

4. **-** Tête d'application selon la revendication 1, **caractérisée en ce que** le mécanisme de coupe **(8)** comporte une enclume **(14)** sur laquelle l'organe de coupe **(10)** assure la coupe des fils de renfort **(2).**

5. - Tête d'application selon l'une des revendications 1 à 4, **caractérisée en ce qu'**elle comporte un dispositif de guidage **(30)** jusqu'à la zone d'application (**5**), d'au moins un fil de renfort **(2)** provenant d'un dispositif de stockage.

6. - Tête d'application selon la revendication 5, **caractérisée en ce que** le dispositif de guidage **(30)** des fils de renfort **(2)** comporte entre le mécanisme de coupe **(8)** et la zone d'application (**5**), un conduit **(31)** tronconique de guidage des fils de renfort s'évasant de la zone d'application **(5)** en direction du mécanisme de coupe **(8).**

7. **-** Tête d'application selon les revendications 5 ou 6, **caractérisée en ce que** le dispositif de guidage **(30)** des fils de renfort **(2)** comporte un guide **(34)** disposé entre le mécanisme de coupe **(8)** et le tambour d'entraînement **(21).**

8. - Tête d'application selon la revendication 5, 6, ou 7, **caractérisée en ce que** le dispositif de guidage **(30)** des fils de renfort **(2)** comporte en amont du tambour d'entraînement **(21),** un bloc de guidage **(36)** dans lequel est aménagé un chemin de guidage individuel pour chaque fil de renfort **(2).**

9. - Tête d'application selon l'une des revendications 1 à 8, **caractérisée en ce qu'**elle comporte un organe applicateur **(39)** monté libre en rotation, dans la zone d'application **(5)** des fils de renfort **(2).**

## Patentansprüche

1. Kopf zum Aufbringen von Verstärkungsfäden (2) auf eine Ablagefläche (3), wobei dieser Kopf umfasst:
- einen Mechanismus (8) zum Schneiden der Verstärkungsfäden (2) stromaufwärts zu einer Anwendungszone (5), umfassend mindestens ein Schneidelement (10) und ein Antriebselement (11), das es ermöglicht, das Schneidelement (10) zu bewegen,
- und ein System zur Wiederbeförderung (16) der Verstärkungsfäden (2) nach ihrem Schneiden zumindest bis zur Anwendungszone (5), umfassend mindestens eine Trommel (18), **dadurch gekennzeichnet, dass** das Schneidelement (10) am Ende eines Arms (12) montiert ist, der in Drehung mit einer Achse (13) verbunden ist, die in Drehung von dem Antriebselement (11) angetrieben wird und es ermöglicht, das Schneidelement (10) in einer kreisförmigen Hin- und Herbewegung einerseits entlang eines Hinweges in eine Drehrichtung (f1) zu bewegen, um das Schneiden der Verstärkungsfäden (2) zu ermöglichen, und andererseits entlang eines Rückweges in eine Drehrichtung (f2) entgegengesetzt zum Hinweg zu bewegen, um die Freigabe des Schneidelements (10) in Bezug auf die Verstärkungsfäden (2) zu ermöglichen, wobei die Trommel (18) auf der Achse (13) montiert ist, wobei sie mit dieser letztgenannten verbunden ist, um in Drehung von dem Antriebselement (11) des Schneidmechanismus (8) angetrieben zu werden, das die Motorisierung des Wiederbeförderungssystems (16) gewährleistet, wobei das Wiederbeförderungssystem (16) einen Mechanismus (20) zum Festklemmen der Verstärkungsfäden (2) an der Trommel (18) umfasst, wobei der Klemmmechanismus (20) eine Gegentrommel (21) umfasst, die gegenüber der Trommel (18) montiert ist, so dass zwischen der Trommel (18) und der Gegentrommel (21) die Verstärkungsfäden (2) verlaufen, wobei die Gegentrommel (21) in Bewegung durch ein System zur Entfernung/Annäherung (24) in Bezug zur Trommel gesteuert wird, um die Gegentrommel (21) entweder vor der Drehung der Trommel (18) entlang ihres Hinweges (f1) zu entfernen, um die Verstärkungsfäden (2) frei zu lassen, oder vor der Drehung der Trommel (18) entlang ihres Rückweges (f2) anzunähern, um den Antrieb der Verstärkungsfäden (2) durch Reibung durch die Trommel (18) bei ihrer Drehung zumindest bis zur Anwendungszone (5) zu gewährleisten.

2. Kopf zum Aufbringen gemäß Anspruch 1, **dadurch gekennzeichnet, dass** das System zur Entfernung/Annäherung (24) einen Schwenkhebel (25) umfasst, der in Bewegung gesteuert wird und mit der Gegentrommel (21) versehen ist.

3. Kopf zum Aufbringen gemäß Anspruch 2, **dadurch gekennzeichnet, dass** der Schwenkhebel (25) in Bewegung durch ein Antriebselement (27) gesteuert wird.

4. Kopf zum Aufbringen gemäß Anspruch 1, **dadurch gekennzeichnet, dass** der Mechanismus (8) zum Schneiden einen Amboss (14) umfasst, auf dem das Schneidelement (10) das Schneiden der Verstärkungsfäden (2) gewährleistet.

5. Kopf zum Aufbringen gemäß einem der Ansprüche 1 bis 4, **dadurch gekennzeichnet, dass** dieser eine Führungsvorrichtung (30) bis zur Anwendungszone (5) umfasst, wobei mindestens ein Verstärkungsfaden (2) von einer Vorratsvorrichtung ausgeht.

6. Kopf zum Aufbringen gemäß Anspruch 5, **dadurch gekennzeichnet, dass** die Führungsvorrichtung (30) der Verstärkungsfäden (2) zwischen dem Mechanismus (8) zum Schneiden und der Anwendungszone (5) ein kegelstumpfförmiges Führungsrohr (31) für die Verstärkungsfäden umfasst, das von der Anwendungszone (5) in die Richtung des Mechanismus (8) zum Schneiden breiter wird.

7. Kopf zum Aufbringen gemäß den Ansprüchen 5 oder 6, **dadurch gekennzeichnet, dass** die Führungsvorrichtung (30) der Verstärkungsfäden (2) eine Führung (34) umfasst, die zwischen dem Mechanismus (8) zum Schneiden und der Antriebstrommel (21) angeordnet ist.

8. Kopf zum Aufbringen gemäß Anspruch 5, 6 oder 7, **dadurch gekennzeichnet, dass** die Führungsvorrichtung (30) der Verstärkungsfäden (2) stromaufwärts zu der Antriebstrommel (21) einen Führungsblock (36) umfasst, in dem eine einzelne Führungsstrecke für jeden Verstärkungsfaden (2) eingerichtet ist.

9. Kopf zum Aufbringen gemäß einem der Ansprüche 1 bis 8, **dadurch gekennzeichnet, dass** diese ein Element (39) zum Aufbringen umfasst, das frei in Drehung in der Anwendungszone (5) der Verstärkungsfäden (2) montiert ist.

## Claims

1. An applicator head for reinforcement yarns (2) on a deposition surface (3), this head including:
- a cutting mechanism (8) of the reinforcement yarns (2) upstream from an application zone (5), including at least one cutting unit (10) and one motor unit (11) giving the possibility of moving the cutting unit (10),
- and a redirection system (16) of the reinforcement yarns (2) after their cutting, at least up the application zone (5), including at least one drum (18) **characterized in that** the cutting unit (10) is mounted at the end of an arm (12) rotatably connected with an axis (13) driven into rotation by the motor unit (11) giving the possibility of moving the cutting unit (10) according to a circular alternating movement, according to a forward stroke in one direction of rotation (f1) for cutting of the reinforcement yarns (2) on the one hand, and according to a return stroke in a direction of rotation (f2) opposite to the forward stroke on the other hand, for disengagement of the cutting unit (10) with respect to the reinforcement yarns (2), the drum (18) being mounted on the axis (13) while being bound to the latter so as to be driven into rotation by the motor unit (11) of the cutting mechanism (8) ensuring that the redirection system (16) is motor-driven, the redirection system (16) including a clamping mechanism (20) of the reinforcement yarns (2) against the drum (18), the clamping mechanism (20) including a counter-drum (21) mounted facing the drum (18) so that the reinforcement yarns (2) pass between the drum (18) and the counter-drum (21), the counter-drum (21) being controlled in motion by a separation/recontacting system (24) with respect to the drum so as to move the counter-drum (21) either by separating them before rotation of the drum (18) in its forward stroke (f1) freeing the reinforcement yarns (2), or in reconnection before rotation of the drum (18) along its return stroke (f2) in order to ensure frictional driving of the reinforcement yarns (2) by the drum (18) during its rotation, at least up to the application zone (5).

2. The applicator head according to claim 1, **characterized in that** the separation/recontacting system (24) includes a pivoting lever (25) controlled in motion and equipped with the counter-drum (21).

3. The applicator head according to claim 2, **characterized in that** the pivoting lever (25) is controlled in motion by a motor unit (27).

4. The applicator head according to claim 1, **characterized in that** the cutting mechanism (8) includes an anvil (14), on which the cutting unit (10) ensures the cutting of the reinforcement yarns (2).

5. The applicator head according to one of claims 1 to 4, **characterized in that** it includes a guiding device (30) up to the application zone (5), for at least one reinforcement yarn (2) from a storage device.

6. The applicator head according to claim 5, **characterized in that** the guiding device (30) for the reinforcement yarns (2) includes between the cutting mechanism (8) and the application zone (5), a guiding truncated cone conduit (31) for the reinforcement yarns, widening from the application zone (5) toward the cutting mechanism (8).

7. The applicator head according to claims 5 or 6, **characterized in that** the guiding device (30) for the reinforcement yarns (2) includes a guide (34) positioned between the cutting mechanism (8) and the driving drum (21).

8. The applicator head according to claim 5, 6 or 7, **characterized in that** the guiding device (30) for the reinforcement yarns (2) includes upstream from the driving drum (21), a guide block (36) in which is made an individual guide path for each reinforcement yarn (2).

9. The applicator head according to one of claims 1 to 8, **characterized in that** it includes an applicator unit (39) mounted so as to rotate freely in the application zone (5) of the reinforcement yarns (2).
